# FASCICULE DE BREVET EUROPEEN

(11) **EP 2 991 847 B1**
(45) Date de publication et mention de la délivrance du brevet: **06.09.2017**
(21) Numéro de dépôt: 14721441.5
(22) Date de dépôt: 24.03.2014
(51) Int. Cl.: B60K 6/448, B60K 6/52, B60W 30/18, B60W 20/00

(54) **STRATÉGIE POUR UN VÉHICULE HYBRIDE, D'ACCOUPLEMENT DANS UN VIRAGE D'UNE MACHINE ÉLECTRIQUE AUX ROUES ARRIÈRE**
STRATEGIE FÜR EIN HYBRIDFAHRZEUG ZUR KOPPLUNG EINER ELEKTRISCHEN MASCHINE MIT DEN HINTERRÄDERN BEI EINER KURVENFAHRT
STRATEGY, FOR A HYBRID VEHICLE, CONCERNING THE COUPLING OF AN ELECTRIC MACHINE WITH THE REAR WHEELS DURING CORNERING

(30) Priorité: 30.04.2013 FR 1353958
(43) Date de publication de la demande: 09.03.2016
(73) Titulaire: PSA Automobiles SA, 78300 Poissy (FR)
(72) Inventeur: BARDET, Arnaud, F-78150 Le Chesnay (FR); FREIRE SUAREZ, Violette, F-78150 Le Chesnay (FR); DOUX, Florian, F-75116 Paris 16 (FR); MILHAU, Yohan, F-78400 Chatou (FR)
(86) Numéro de dépôt international: PCT/FR2014/050685
(87) Numéro de publication internationale: WO 2014/177780

(56) Documents cités:
- DE-A1-102004 049 324
- DE-A1-102010 030 831
- US-A1- 2008 059 022
- US-A1- 2011 257 826

## Description

La présente invention concerne pour un véhicule hybride comportant un moteur thermique et au moins une machine électrique de traction, une stratégie d'accouplement de cette machine en virage, ainsi qu'un véhicule hybride mettant en oeuvre une telle stratégie.

Un type de véhicule hybride connu, présenté notamment par le document WO-A1-2012/002061, comporte un moteur thermique disposé transversalement à l'avant, accouplé à une transmission automatique comprenant une machine électrique intégrée dedans. La transmission comporte deux embrayages d'entrée qui transmettent le couple à deux boîtes de vitesses disposées en parallèle, permettant de changer le rapport de vitesse sans interrompre la transmission du couple aux roues motrices.

La machine électrique est liée à une de ces boîtes de vitesses, pour travailler en moteur en apportant un supplément de couple aux roues avant motrices, ou en génératrice en recevant un couple de ces roues afin de produire un courant électrique de recharge de batteries.

La sélection des rapports de vitesse de la transmission et du type de fonctionnement de la machine électrique, est gérée automatiquement afin d'optimiser la consommation d'énergie. US 2011/02578216 A divulgue un véhicule hybride avec un moteur thermique entraînant les roues avant et un moteur électrique entraînant les roues arrières. Pour la circulation du véhicule dans un virage, ce véhicule hybride met en oeuvre une stratégie qui réalise après la détection de ce virage, une interdiction de changement du rapport de vitesse dans la courbe. Dans ces conditions pour répondre à une demande de couple venant du conducteur, on utilise seulement un couple délivré par la machine électrique si le niveau de charge des batteries qui l'alimentent le permet, pour augmenter le niveau de couple sur les roues avant dans le virage.

Toutefois cette stratégie concerne un véhicule hybride comprenant un moteur thermique et une machine électrique qui se combinent pour appliquer un couple uniquement sur le train avant, par l'intermédiaire d'une transmission spécifique.

Dans le cas d'un véhicule hybride comportant une machine électrique appliquant un couple sur le train arrière, les caractéristiques du couple délivré par cette machine sont différentes, et les problèmes de motorisation et de stabilité de ce train arrière sont aussi différents.

Pour ce type de véhicule, on cherche à accoupler la machine électrique quand elle est nécessaire pour produire un couple ou générer un courant électrique, et à la désaccoupler dès que possible afin de réduire les frottements qui freinent l'avance du véhicule. On peut donc obtenir des accouplements fréquents pour réduire la consommation d'énergie.

La présente invention a notamment pour but d'assurer la sécurité d'un véhicule hybride comprenant un moteur thermique entraînant les roues avant, et une machine électrique indépendante entraînant les roues arrière par un système d'accouplement.

Elle propose à cet effet une stratégie d'accouplement d'une machine électrique aux roues arrière d'un véhicule hybride comprenant un groupe motopropulseur disposant d'un moteur thermique entraînant les roues avant, cette machine électrique étant équipée d'un système d'accouplement aux roues arrière commandé automatiquement, caractérisée en ce qu'en cas de détection du roulage en virage, elle interdit un accouplement de la machine électrique aux roues arrière pendant ce virage, et elle autorise cet accouplement seulement après une confirmation de sortie du virage qui dépend de conditions de validation assurant une fin de détection de ce virage depuis un certain temps.

Un avantage de cette stratégie est qu'indépendamment du fonctionnement du groupe motopropulseur entraînant les roues avant, elle permet d'éviter un accouplement de la machine électrique en virage qui peut donner une variation de couple sur les roues arrières dans des conditions délicates. On évite ainsi une déstabilisation du train arrière du véhicule.

La stratégie d'accouplement selon l'invention peut en outre comporter une ou plusieurs des caractéristiques suivantes, qui peuvent être combinées entre elles.

Avantageusement, la détection du roulage en virage utilise au moins une information liée au fonctionnement du véhicule, comprenant l'accélération latérale de ce véhicule, la mesure de l'angle du volant de direction, la vitesse du véhicule ou la vitesse différentielle des roues gauche et droite d'un même train, donnée par une comparaison de chaque vitesse individuelle.

En complément, la détection du roulage en virage peut utiliser au moins une information sur des données extérieures au véhicule, comme un positionnement « GPS », ou des images venant d'une caméra filmant la route en avant du véhicule.

Avantageusement, les conditions de validation assurant une fin de détection de virage, comportent une temporisation depuis cette fin de détection, ou une distance parcourue depuis cette fin de détection.

Avantageusement, les conditions de validation assurant une fin de détection de virage, sont variables en fonction de paramètres de roulage du véhicule.

En particulier, les conditions de validation assurant une fin de détection de virage peuvent être variables en fonction de la vitesse du véhicule, ou de la pente de la route.

L'invention a aussi pour objet un véhicule hybride disposant d'une machine électrique comprenant un système d'accouplement aux roues arrière commandé automatiquement, et d'un groupe motopropulseur comprenant un moteur thermique entraînant les roues avant, ce véhicule comportant des moyens mettant en oeuvre une stratégie d'accouplement de la machine dans un virage, comprenant l'une quelconque des caractéristiques précédentes.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un schéma d'un véhicule hybride mettant en oeuvre la stratégie d'accouplement selon l'invention ; et
- la figure 2 est un schéma présentant les principales fonctions utilisées par cette stratégie d'accouplement.

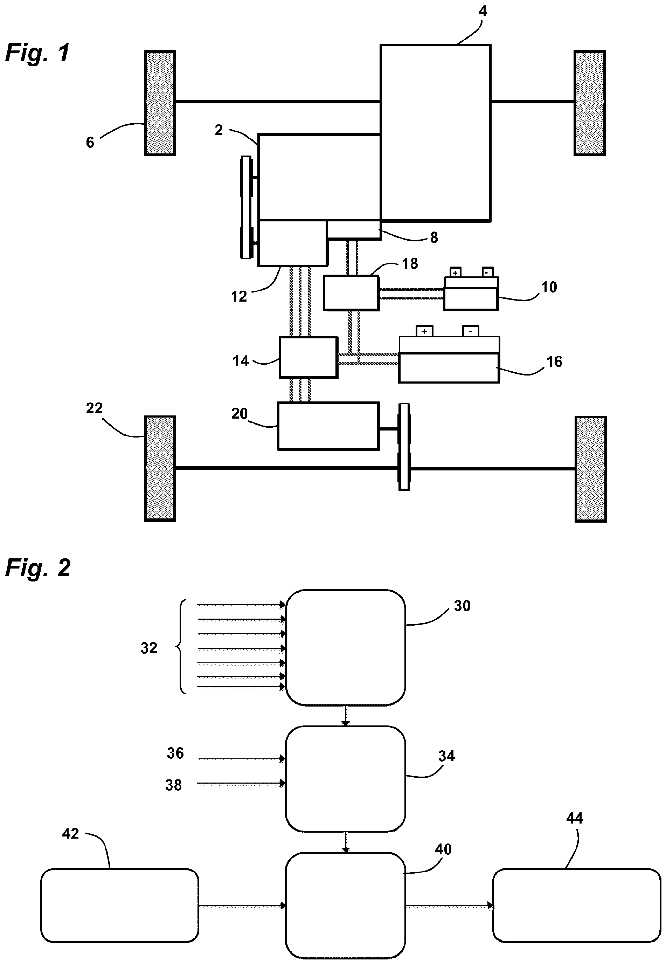

La figure 1 présente un véhicule hybride comportant un moteur thermique 2 constituant une première motorisation entraînant les roues avant 6 par une transmission 4. Le moteur thermique 2 comporte un démarreur électrique 8, alimenté en courant par une batterie basse tension 10.

La transmission 4 peut être réalisée suivant les différents types connus, comprenant notamment les boîtes de vitesses manuelles, les boîtes de vitesses robotisées et les transmissions automatiques.

Une machine électrique auxiliaire 12 est couplée en permanence au moteur thermique 2, afin de l'assister dans son fonctionnement.

Une machine électrique principale 20 constitue une deuxième motorisation qui peut être liée aux roues arrière 22 du véhicule, par un système d'accouplement comportant un crabot commandé automatiquement.

Les deux machines électriques 12, 20 sont reliées à un onduleur 14, qui est lui-même relié à un système de stockage principal d'énergie électrique 16, comme des batteries hautes tension, permettant de délivrer ou de recevoir une puissance électrique importante.

Un convertisseur de courant DC-DC 18 est interposé entre la batterie basse tension 10 et les batteries haute tension 16, afin de recharger si nécessaire cette batterie basse tension à partir d'une énergie prélevée dans les batteries haute tension, avec une adaptation de la tension du courant réalisée par le convertisseur.

Le véhicule hybride peut ainsi fonctionner avec différents modes de roulage, comprenant un mode hybride associant les deux motorisations 2, 20, un mode électrique ou «ZEV» utilisant uniquement la machine électrique principale 20, le moteur thermique 2 étant arrêté et la transmission 4 étant au point mort, un mode avec quatre roues motrices et un mode sport utilisant les deux motorisations pour entraîner les deux trains du véhicule.

La combinaison des deux machines électriques 12, 20 et du moteur thermique 2, permet de diminuer la consommation du véhicule en récupérant son énergie cinétique quand le conducteur relâche la pédale d'accélérateur, et exprime par là une demande de couple négatif donnant un freinage de ce véhicule. Les deux machines électriques 12, 20 produisent alors un courant de recharge de la batterie haute tension 16.

Pour différentes raisons comme la vitesse maximum admissible par la machine électrique principale 20, la sûreté de fonctionnement, ou une réduction des forces de frottement, la commande des motorisations peut demander un découplage de cette machine électrique.

La commande des motorisations peut ensuite de manière automatique à tout moment, demander à nouveau un accouplement de la machine électrique 20 aux roues arrière 22 par engagement de son crabot. Cette demande peut intervenir notamment si le conducteur a relâché la pédale d'accélérateur, afin de récupérer une énergie du freinage du véhicule correspondant à la demande du conducteur.

On a alors avec l'inertie et les forces de frottement de la machine électrique 20, un engagement qui peut comporter une variation brutale de couple sur les roues arrière 22, en créant une instabilité du véhicule, et un risque de dérapage dans le cas où ses conditions d'adhérence au sol sont limitées.

La figure 2 présente une fonction de détection de virages 30, qui détecte les virages à partir d'informations 32 données par différents capteurs, utilisées seules ou combinées à plusieurs.

Les informations 32 peuvent comporter des valeurs liées au fonctionnement du véhicule, comprenant notamment l'accélération latérale de ce véhicule, la mesure de l'angle du volant de direction, la vitesse du véhicule, ou la vitesse différentielle des roues gauche et droite d'un même train, donnée par une comparaison de chaque vitesse individuelle.

Les informations 32 peuvent aussi comporter des données extérieures au véhicule permettant d'identifier la situation dans un virage, comprenant par exemple des données de positionnement «GPS», ou des images venant d'une caméra filmant la route en avant du véhicule.

On utilise avantageusement suivant le type d'information 32 la valeur instantanée de cette information ainsi que son évolution dans le temps, qui peuvent donner des éléments importants pour caractériser le roulage dans le virage.

La détection du virage en cours est transmise à une fonction de confirmation de sortie du virage 34, qui confirme la sortie de ce virage seulement après des conditions de validation permettant de s'assurer que la détection du virage n'est plus activée depuis un certain temps.

Ces conditions de validation de sortie du virage peuvent comporter notamment suivant l'information 32 qui a été prise en compte pour détecter ce virage, un temps défini par une temporisation, ou une distance parcourue depuis la fin de cette détection.

Avantageusement les conditions de validation de sortie du virage, comme le temps ou la distance parcourue, sont variables en fonction de certains paramètres comme la vitesse du véhicule 36 ou la pente réelle de la route 38, reçues par la fonction de confirmation de sortie du virage 34, afin de réaliser une filtration adaptée du signal venant de la fonction de détection de virage 30.

Le signal donné par la fonction de confirmation de sortie du virage 34, est transmis à une fonction de coordination 40 qui reçoit la demande de couplage ou de découplage brute 42 venant de la commande des motorisations. Cette fonction de coordination réalise alors le couplage 44 de la machine électrique 20 seulement en cas de demande de couplage brute 42, et d'absence de virage ou de confirmation de sortie de virage.

On sécurise ainsi de manière simple et efficace, avec seulement des compléments de logiciels, le couplage de la machine électrique arrière 20 qui ne peut se faire dans certaines conditions pouvant déstabiliser le véhicule.

## Revendications

1. Stratégie d'accouplement d'une machine électrique (20) aux roues arrière (22) d'un véhicule hybride comprenant un groupe motopropulseur disposant d'un moteur thermique (2) entraînant les roues avant (6), cette machine électrique étant équipée d'un système d'accouplement aux roues arrière (22) commandé automatiquement, **caractérisée en ce qu'**en cas de détection du roulage en virage (30), elle interdit un accouplement de la machine électrique (20) aux roues arrière (22) pendant ce virage, et elle autorise cet accouplement seulement après une confirmation de sortie du virage (34) qui dépend de conditions de validation assurant une fin de détection de ce virage depuis un certain temps.

2. Stratégie d'accouplement selon la revendication 1, **caractérisé en ce que** la détection du roulage en virage (30) utilise au moins une information (32) liée au fonctionnement du véhicule, comprenant l'accélération latérale de ce véhicule, la mesure de l'angle du volant de direction, la vitesse du véhicule ou la vitesse différentielle des roues gauche et droite d'un même train, donnée par une comparaison de chaque vitesse individuelle.

3. Stratégie d'accouplement selon la revendication 1 ou 2, **caractérisé en ce que** la détection du roulage en virage (30) utilise au moins une information (32) sur des données extérieures au véhicule, comme un positionnement « GPS », ou des images venant d'une caméra filmant la route en avant du véhicule.

4. Stratégie d'accouplement selon l'une quelconque des revendications précédentes, **caractérisé en ce que** les conditions de validation assurant une fin de détection de virage, comportent une temporisation depuis cette fin de détection, ou une distance parcourue depuis cette fin de détection.

5. Stratégie d'accouplement selon l'une quelconque des revendications précédentes, **caractérisé en ce que** les conditions de validation assurant une fin de détection de virage, sont variables en fonction de paramètres de roulage du véhicule.

6. Stratégie d'accouplement selon la revendication 5, **caractérisé en ce que** les conditions de validation assurant une fin de détection de virage sont variables en fonction de la vitesse du véhicule (36), ou de la pente de la route (38).

7. Véhicule hybride disposant d'une machine électrique (20) comprenant un système d'accouplement aux roues arrière (22) commandé automatiquement, et d'un groupe motopropulseur comprenant un moteur thermique (2) entraînant les roues avant (6), **caractérisé en ce qu'**il comporte des moyens mettant en oeuvre une stratégie d'accouplement de cette machine dans un virage, réalisée selon l'une quelconque des revendications précédentes.

## Patentansprüche

1. Strategie zur Kopplung einer elektrischen Maschine (20) mit den Hinterrädern (22) eines Hybridfahrzeugs, das ein Antriebsaggregat umfasst, das über eine Brennkraftmaschine (2) verfügt, die die Vorderräder (6) antreibt, wobei diese elektrische Maschine mit einem System zum Koppeln mit den Hinterrädern (22) ausgestattet ist, das automatisch gesteuert wird, **dadurch gekennzeichnet, dass** sie in dem Fall des Erfassens des Kurvenfahrens (30) ein Koppeln der elektrischen Maschine (20) mit den Hinterrädern (22) während dieser Kurve unterbindet, und dieses Koppeln erst nach einer Bestätigung des Ausfahrens aus der Kurve (34) gestattet, die von Bestätigungsbedingungen abhängt, die ein Ende des Erfassens dieser Kurve seit einer bestimmten Zeit sicherstellen.

2. Kopplungsstrategie nach Anspruch 1, **dadurch gekennzeichnet, dass** das Erfassen des Kurvenfahrens (30) mindestens eine Information (32) verwendet, die mit dem Betrieb des Fahrzeugs verbunden ist, die die seitliche Beschleunigung dieses Fahrzeugs, die Messung des Winkels des Lenkrads, die Geschwindigkeit des Fahrzeugs oder die Drehzahldifferenz des linken und rechten Rads ein und derselben Achse, die durch einen Vergleich jeder einzelnen Drehzahl gegeben wird, umfasst.

3. Kopplungsstrategie nach Anspruch 1 oder 2, **dadurch gekennzeichnet, dass** das Erfassen des Kurvenfahrens (30) mindestens eine Information (32) über Daten außerhalb des Fahrzeugs verwendet, wie eine "GPS"-Positionierung oder Bilder, die von einer Kamera stammen, die die Straße vor dem Fahrzeug filmt.

4. Kopplungsstrategie nach einem der vorhergehenden Ansprüche, **dadurch gekennzeichnet, dass** die Bestätigungsbedingungen, die ein Ende des Kurvenerfassens sicherstellen, eine Verzögerung ab diesem Erfassungsende oder eine seit diesem Erfassungsende zurückgelegte Entfernung umfassen.

5. Kopplungsstrategie nach einem der vorhergehenden Ansprüche, **dadurch gekennzeichnet, dass** die Bestätigungsbedingungen, die ein Ende des Kurvenerfassens sicherstellen, in Abhängigkeit von Fahrparametern des Fahrzeugs variabel sind.

6. Kopplungsstrategie nach Anspruch 5, **dadurch gekennzeichnet, dass** die Bestätigungsbedingungen, die ein Ende des Kurvenerfassens sicherstellen, in Abhängigkeit von der Geschwindigkeit des Fahrzeugs (36) oder dem Gefälle der Straße (38) variabel sind.

7. Hybridfahrzeug, das über eine elektrische Maschine (20) verfügt, die ein System zum Koppeln mit den Hinterrädern (22) umfasst, das automatisch gesteuert ist, und ein Antriebsaggregat, das eine Brennkraftmaschine (2) umfasst, die die Vorderräder (6) antreibt, **dadurch gekennzeichnet, dass** es Mittel umfasst, die eine Kopplungsstrategie dieser Maschine in einer Kurve umsetzen, die nach einem der vorhergehenden Ansprüche ausgeführt ist.

## Claims

1. A strategy concerning the coupling of an electric machine (20) with the rear wheels (22) of a hybrid vehicle including a power train provided with a heat engine (2) driving the front wheels (6), this electric machine being equipped with an automatically controlled system for coupling with the rear wheels (22), **characterized in that** in the case of detection of cornering (30), it prohibits a coupling of the electric machine (20) with the rear wheels (22) during this cornering, and it permits this coupling only after a confirmation of the end of cornering (34), which depends on validation conditions ensuring an end of detection of this cornering since a certain period of time.

2. The coupling strategy according to claim 1, **characterized in that** the detection of the cornering (30) uses at least one piece of information (32) linked to the functioning of the vehicle, including the lateral acceleration of this vehicle, the measurement of the angle of the steering wheel, the speed of the vehicle or the differential speed of the left and right wheels of the same set, given by a comparison of each individual speed.

3. The coupling strategy according to claim 1 or 2, **characterized in that** the detection of cornering (30) uses at least one piece of information (32) concerning exterior data of the vehicle, such as a "GPS" positioning, or images originating from a camera filming the road in front of the vehicle.

4. The coupling strategy according to any one of the preceding claims, **characterized in that** the validation conditions ensuring an end of detection of cornering comprise a delay time since this end of detection, or a distance covered since this end of detection.

5. The coupling strategy according to any one of the preceding claims, **characterized in that** the validation conditions ensuring an end of detection of cornering are variable as a function of running parameters of this vehicle.

6. The coupling strategy according to claim 5, **characterized in that** the validation conditions ensuring an end of detection of cornering are variable as a function of the speed of the vehicle (36), or of the gradient of the road (38).

7. A hybrid vehicle provided with an electric machine (20) including an automatically controlled system for coupling with the rear wheels (22), and a power train including a heat engine (2) driving the front wheels (6), **characterized in that** it comprises means implementing a strategy concerning the coupling of this machine on cornering, realized according to any one of the preceding claims.
